# EUROPEAN PATENT APPLICATION

(11) **EP 4 311 936 A1**
(43) Date of publication of application: **31.01.2024**
(21) Application number: 22187698.0
(22) Date of filing: 29.07.2022
(51) Int. Cl.: F03D 80/00, F16F 7/14, F03D 13/20

(54) **DAMPING ARRANGEMENT**

(71) Applicant: Siemens Gamesa Renewable Energy A/S, 7330 Brande (DK)
(72) Inventor: Seidel Marc Dr., 49082 Osnabrück (DE); Enevoldsen Peder Bay, 7100 Vejle (DK)
(74) Representative: SGRE-Association

(57) **Abstract**

The invention relates to a damping arrangement (1) for counteracting oscillations of a plurality of towers (11, 12, 13, 14) of wind turbines (2) comprising a first tower (11) positioned at a first position (21), a second tower (12) positioned at a second position (22) different from the first position (21), and a damping means (7) for suppressing and/or dampening oscillations at least partly originated from the relative movement of the towers (11, 12, 13, 14) to each other. According to the invention, the damping means (7) comprises a first damping element (41) arranged between the first tower (11) and the second tower (12) and coupled to both the first tower (11) and the second tower (12).

## Description

The present invention relates to a damping arrangement for counteracting oscillations of a plurality of towers of wind turbines.

Vortex Induced Vibrations is a complex phenomenon involving fluid mechanics and structural mechanics. The originated oscillations are relevant for the durability of structures, such as wind turbine towers, due to the large oscillation amplitudes involved in the vibrations as well as to the long-term cyclic loads which can cause significant fatigue damage to the structures.

Vortex Induced Vibrations are originated in the wind turbine towers due to the fluid-structure interaction, in which the fluid pressure fluctuates as vortices shed alternately from each side of the cylindrical tower. The repeating pattern of swirling vortices is responsible for the unsteady separation of fluid flow and is known as the von Karman vortex street. The alternating shedding causes an oscillating lift and drag forces on the circular cylinder. At the cylinder surface, there is friction due to the air viscosity. The region around the cylinder can be classified in two regions, the former one in which the flow is attached and the latter one in which the flow is separated from the cylinder surface. At the boundary layer, the flow velocity is zero and increases to the flow velocity at the outer edge of the boundary layer. The friction of the boundary layer causes the flow to "roll-over", creating a vortex.

Before the commissioning of the towers in the offshore wind farms, there is a number of different load cases when these structures are susceptible to Vortex Induced Vibrations. Some of these cases are when the towers stand on the quay side, on the vessel during their transportation offshore and as installed towers on the foundation, e.g., monopile or jacket, before the installation of the rotor-nacelle assembly.

In addition to Vortex Induced Vibrations, when a plurality of cylindrical structures such as wind turbine towers are placed close together, vibrations with large amplitudes can be observed. Due to the aeroelastic coupling between the motion of the towers, large vibration amplitudes can build up, which can greatly damage the towers. This phenomenon is called interference galloping and it is characterized by changes in flow patterns around cylinders, which can be caused by small changes in wind direction. In addition, large vibrations occur because the towers can move relative to each other.

Vibration absorbers are commonly used in high and slender structures to attenuate vibrations. For example, US2019063063A1 discloses a damping arrangement for counteracting oscillations of a structure comprising a plurality of mass dampers installed inside the wind turbine tower. Such mass dampers are very costly and require a rigid tower with enough inner space for accommodating the damping arrangement. CN 202091424 U describes a further example of a vibration damper mounted in a wind turbine tower.

If a tower is subjected to vibrations or oscillations during a prolonged period of time, fatigue damage may result. Fatigue damage may lead to a reduced lifetime of the wind turbine tower and/or its components. Furthermore, a danger exists that when vibrations cause resonance in the wind turbine tower, this can lead to a potentially dangerous increase of the vibrations which in turn leads to an increase in movements of the structure in and out its rest position which may result in potential structural damages of the structure.

The current development of the technology of wind turbines tends to an increased size of wind turbines for harvesting more wind energy, with longer blades and higher towers. In the offshore wind industry, the risk of Vortex Induced Vibrations and of interference galloping becomes more important as the size of the towers is increasing. Both phenomena are of significant importance due to the fatigue damage on the wind turbine towers caused by the oscillations. The possible reduction of their lifetime can be critical for the fatigue design. Furthermore, maximum loads due to oscillations can be crucial for the design of the quay side foundation frames and the sea fastenings.

It is an object of the invention to provide a damping arrangement for counteracting oscillations of a plurality of towers of wind turbines that overcomes the problems known from oscillation phenomena such as interference galloping.

This is achieved by a damping arrangement according to claim 1.

According to the invention, a damping arrangement for counteracting oscillations of a plurality of towers of wind turbines comprises a first tower positioned at a first position, a second tower positioned at a second position different from the first position, and a damping means for suppressing and/or dampening oscillations at least partly originated from the relative movement of the towers to each other.

According to the invention, the damping means comprises a first damping element arranged between the first tower and the second tower and coupled to both the first tower and the second tower.

Large vibrations occur because the towers can move relative to each other. As the damping means are coupled to both towers, the relative movement of the towers to each other is suppressed and no oscillation can build up between the towers.

The towers can be positioned on a quayside or on the installation vessel, but also installed on the installation location.

According to a preferred embodiment of the invention, the damping means further comprises a second damping element arranged between the first tower and the second tower and coupled to both the first tower and the second tower.

Having two damping elements coupled to the first and the second tower allows for a more stable damping, as the forces and oscillations can be more evenly counteracted.

According to another preferred embodiment of the invention, the second damping element is arranged at a first angle from the first damping element. This angle varies depending on the attaching points of the first and the second damping elements to the first and the second towers and on the distance of the towers to each other. In particular the bigger the angle, the better the oscillations can be dampened, as the forces resulting from the oscillation in different directions can be more easily dissipated.

According to another preferred embodiment of the invention, the first angle is of at least 15°. Such an angle allows to dampen forces in different directions.

According to another preferred embodiment of the invention, the first tower is positioned substantially vertically at the first position

According to another preferred embodiment of the invention, the second tower is positioned substantially vertically at the second position.

According to another preferred embodiment of the invention, the damping means further comprises a first rigid element arranged between the first tower and the second tower and coupled to both the first tower and the second tower. A rigid element is a stiff element which does not compress under oscillations of the towers. The rigid element can be a beam. Beams are easier to handle and install compared to other more complex structures such as frames.

A rigid element avoids the damping elements to become slack in case the towers are displaced towards each other by maintaining the horizontal distance between the towers.

Rigid elements prevent the movement of the towers to each other by providing a rigid coupling between the towers. In comparison, the damping elements provide a dampening or elastic coupling between the towers and are thus able to absorb oscillations of the towers better than a rigid element.

According to another preferred embodiment of the invention, the damping element comprises resilient means, in particular made from an elastomeric material.

Resilient means are means which generate a force between the components coupled by the resilient means depending on the relative position of the components to each other and which have a neutral position at which no force is exerted between the components. The purpose of this coupling is to have a flexible coupling and thereby being able to react to transversal displacements of the towers the resilient means are attached to.

According to another preferred embodiment of the invention, the damping element is further configured as a tensioning element providing a predetermined pretension between the towers. A pretension allows to elastically dampen oscillations resulting from the vibration of the towers.

According to another preferred embodiment of the invention, the damping element comprises a rope.

A rope can function as a tensioning element providing the necessary pretension between the towers it is attached to.

The pretension of ropes can be adjusted by using pulleys or similar means known in the art. A loosened rope can be thus tightened by these means, for example to adjust the needed dampening to the weather conditions. The longer the ropes, the more energy can be dissipated

According to another preferred embodiment of the invention, the damping element comprises a hydraulic damper configured to provide a counter force against the relative movement of the towers.

Hence, the hydraulic damper is configured to efficiently dissipate energy when towers move relatively to each other. When the first tower is moving towards the second tower, hydraulic pressure is generated in the hydraulic damper between both towers, which keeps the damping means tight between the towers. When the first tower is moving away from the second tower, hydraulic pressure is generated in the hydraulic damper between both towers, which brakes the movement of the towers and dampens the oscillations.

By continuously adjusting the length of the damping element following the oscillations of the towers, the oscillations can be counteracted by the hydraulic damper by extracting the energy from the vibrations. The hydraulic damper can also adjust the pretension of the damping element between the towers to prepare for periods of more wind, for example.

The hydraulic damper can be designed with two pressure levels. The former one can be a low-pressure level used to keep the damping element tight when the towers are moving towards each other and the latter one can be a high-pressure level used to keep the damping element tight when the towers are moving away from each other.

The hydraulic damper can be added to at least one end of a rope tensioned between the towers for having the benefits of both using a rope and using a hydraulic damper. Hydraulic dampers can also be added to each end of the rope.

According to another preferred embodiment of the invention, the damping arrangement further comprises a third tower positioned at a third position different from the first position and the second position, wherein the damping means further comprises a third damping element arranged between the first tower and the third tower and coupled to both the first tower and the third tower.

According to another preferred embodiment of the invention, the third tower is positioned substantially vertically at the third position.

According to another preferred embodiment of the invention, the damping means further comprises a fourth damping element arranged between the first tower and the third tower and coupled to both the first tower and the third tower.

According to another preferred embodiment of the invention, the damping means further comprises a first rigid element arranged between the first tower and the second tower and coupled to both the first tower and the second tower and/or a second rigid element arranged between the first tower and the third tower and coupled to both the first tower and the third tower.

According to another preferred embodiment of the invention, the damping arrangement further comprises a fourth tower positioned at a fourth position different from the first position, the second position and the third position, wherein the damping means further comprises a fifth damping element arranged between the third tower and the fourth tower and coupled to both the third tower and fourth tower.

According to another preferred embodiment of the invention, the fourth tower is positioned substantially vertically at the fourth position.

According to another preferred embodiment of the invention, the damping means further comprises a sixth damping element arranged between the third tower and the fourth tower and coupled to both the third tower and fourth tower.

According to another preferred embodiment of the invention, the damping arrangement further comprises a fourth tower positioned at a fourth position different from the first position, the second position and the third position, wherein the damping means further comprises a first rigid element arranged between the first tower and the second tower and coupled to both the first tower and the second tower, a second rigid element arranged between the first tower and the third tower and coupled to both the first tower and the third tower, a third rigid element arranged between the fourth tower and the third tower and coupled to both the fourth tower and the third tower and a fourth rigid element arranged between the fourth tower and the second tower and coupled to both the fourth tower and the second tower.

According to another preferred embodiment of the invention, the damping element, such as the first damping element or any further damping element of the damping means, is coupled to the respective towers at the upper half of the tower, preferably at the upper third of the tower. By coupling the damping elements close to the upper end of the towers, the oscillations can be more efficiently dampened, as the highest oscillation amplitude takes place at the top of the towers, as the towers are usually erected on their bottom end.

Yet another aspect of the invention relates to a damping arrangement for counteracting oscillations of a plurality of wind turbines arranged in a wind park. The damping arrangement comprises a first wind turbine comprising a first tower positioned at a first position, a second wind turbine comprising a second tower positioned at a second position different from the first position, and a damping means for suppressing and/or dampening oscillations at least partly originated from the relative movement of the towers to each other.

The damping means comprises a first damping element arranged between the first tower and the second tower and coupled to both the first tower and the second tower.

In order to facilitate the understanding of the characteristics of the invention and being an integral part of this specification, some drawing sheets are attached on which figures, with an illustrative but not limiting character, the following is represented:
Figure 1 shows another damping arrangement comprising two wind turbine towers according to a first embodiment of the invention.
Figure 2 shows another damping arrangement comprising two wind turbine towers according to a second embodiment of the invention.
Figure 3 shows a cross-section of the towers of the damping arrangement of Figure 2.
Figure 4 shows another damping arrangement comprising three wind turbine towers.
Figure 5 shows a cross-section of the towers of the damping arrangement of Figure 4.
Figures 6 to 8 show damping arrangements according to further embodiments of the invention comprising a plurality of wind turbine towers.
Figures 9 to 11 show damping arrangements according to further embodiments of the invention comprising four wind turbine towers.
Figure 12 shows a damping arrangement comprising two installed wind turbines.

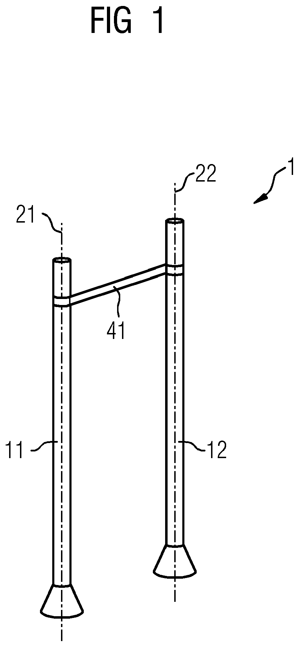

Figure 1 shows a damping arrangement 1 for counteracting oscillations of a plurality of towers 11, 12, of wind turbines 2 comprising a first tower 11, a second tower 12 and a damping means 7 for suppressing and/or dampening oscillations at least partly originated from the relative movement of the towers 11, 12 to each other.

The first tower 11 is positioned at a first position 21 and the second tower 12 positioned at a second position 22 different from the first position 21.

The damping means 7 comprises a first damping element 41 arranged between the first tower 11 and the second tower 12 and coupled to both the first tower 11 and the second tower 12.

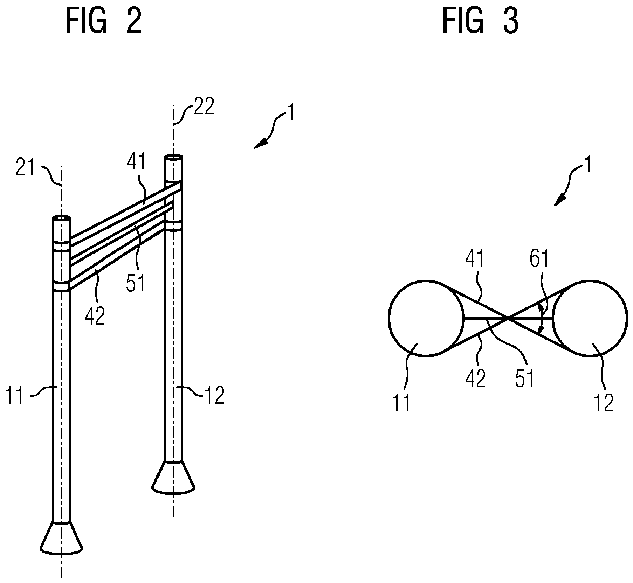

Figure 2 shows another damping arrangement 1 comprising two wind turbine towers 11, 12. Figure 3 shows a cross-section of the towers 11, 12 of the damping arrangement 1 of Figure 2.

The first tower 11 is positioned at a first position 21 and the second tower 12 positioned at a second position 22 different from the first position 21.

The damping means 7 comprises a first damping element 41, a second damping element 42 and a first rigid element 51, all three components arranged between the first tower 11 and the second tower 12 and coupled to both the first tower 11 and the second tower 12.

As can be seen in Figure 3, a cross arrangement between the first damping element 41 and the second damping element 42 can be achieved by arranging the second damping element 42 at a first angle 61 from the first damping element 41. The first angle 61 varies depending on the attaching points of the first and the second damping elements 41, 42 to the first and the second towers 11, 12 and on the distance of the towers 11, 12 to each other. In particular the bigger the angle, the better the oscillations can be dampened, as the forces resulting from the oscillation in different directions can be more easily dissipated.

In the example shown in these Figures, the first and the second damping elements 41, 42 are ropes. To avoid the damping elements 41, 42 to become slack in case the towers 11, 12 are displaced towards each other, a first rigid element 51 is coupled to each tower 11, 12 to maintain the horizontal distance.

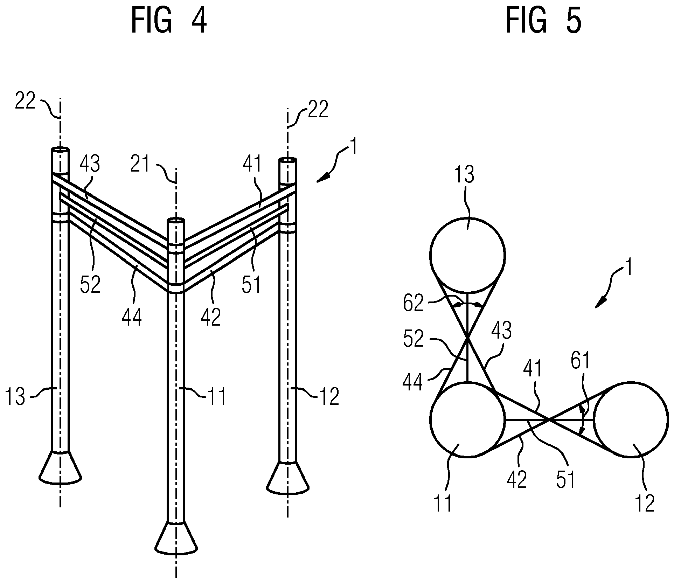

Figure 4 shows another damping arrangement 1 comprising three wind turbine towers 11, 12, 13. Figure 5 shows a cross-section of the towers 11, 12, 13 of the damping arrangement 1 of Figure 4.

In a similar way as in Figures 2 and 3, in Figures 4 and 5 the damping means 7 comprises a first damping element 41, a second damping element 42 and a first rigid element 51, all three components arranged between the first tower 11 and the second tower 12 and coupled to both the first tower 11 and the second tower 12.

In addition, the damping means 7 comprises a third damping element 43, a fourth damping element 44 and a second rigid element 52, all three components arranged between the first tower 11 and the third tower 13 and coupled to both the first tower 11 and the third tower 13.

As can be seen in Figure 3, a cross arrangement between the first damping element 41 and the second damping element 42 can be achieved by arranging the second damping element 42 at a first angle 61 from the first damping element 41. Similarly, a cross arrangement between the third damping element 43 and the fourth damping element 44 can be achieved by arranging the third damping element 43 and at a second angle 62 from the fourth damping element 44.

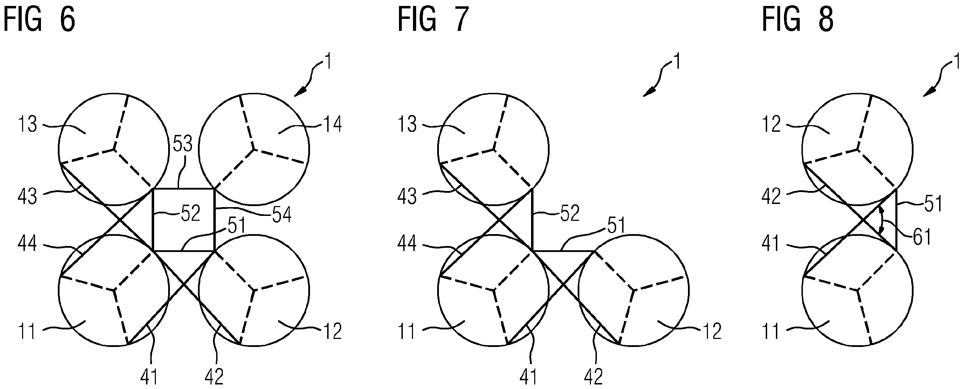

Figures 6 to 8 show damping arrangements 1 according to further embodiments of the invention coupled to a plurality of wind turbine towers 11, 12, 13, 14.

The towers 11, 12, 13, 14 can be mutually connected using different arrangements of damping elements 41, 42, 43, 44 and of rigid elements 51, 52, 53, 54.

In the first example of Figure 6, the first tower 11 is attached to the second tower 12 by a first damping element 41 and a second damping element 42, as well as by a first rigid element 51. The first tower 11 is attached to the third tower 13 by a third damping element 43 and a fourth damping element 44, as well as by a second rigid element 52. The second tower 12 is attached to the fourth tower 14 only by a fourth rigid element 54. The third tower 13 is attached to the fourth tower 14 only by a third rigid element 53.

In the second example of Figure 7, the first tower 11 is attached to the second tower 12 by a first damping element 41 and a second damping element 42, as well as by a first rigid element 51. The first tower 11 is attached to the third tower 13 by a third damping element 43 and a fourth damping element 44, as well as by a second rigid element 52.

In the third example of Figure 8, the first tower 11 is attached to the second tower 12 by a first damping element 41 and a second damping element 42, as well as by a first rigid element 51.

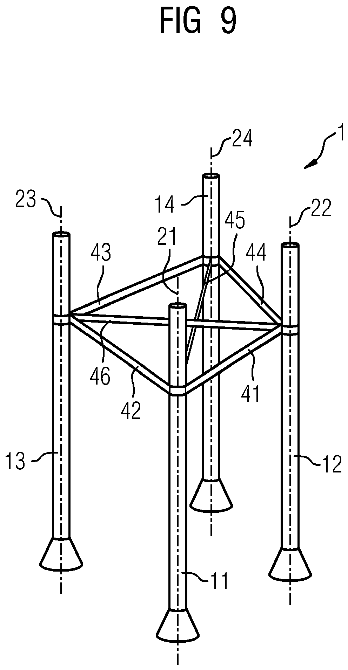

Figures 9 to 11 show damping arrangements according to further embodiments of the invention comprising four wind turbine towers.

In these Figures, all towers 11, 12, 13, 14 are attached to each other by damping elements 41, 42, 43, 44, 45, 46.

In Figure 9, the first tower 11 is attached to the second tower 12 by a first damping element 41. The first tower 11 is attached to the third tower 13 by a second damping element 42. The first tower 11 is attached to the fourth tower 14 by a fifth damping element 45. The second tower 12 is attached to the fourth tower 14 by a fourth damping element 44. The third tower 12 is attached to the fourth tower 14 by a third damping element 43. The third tower 12 is attached to the second tower 12 by a sixth damping element 46.

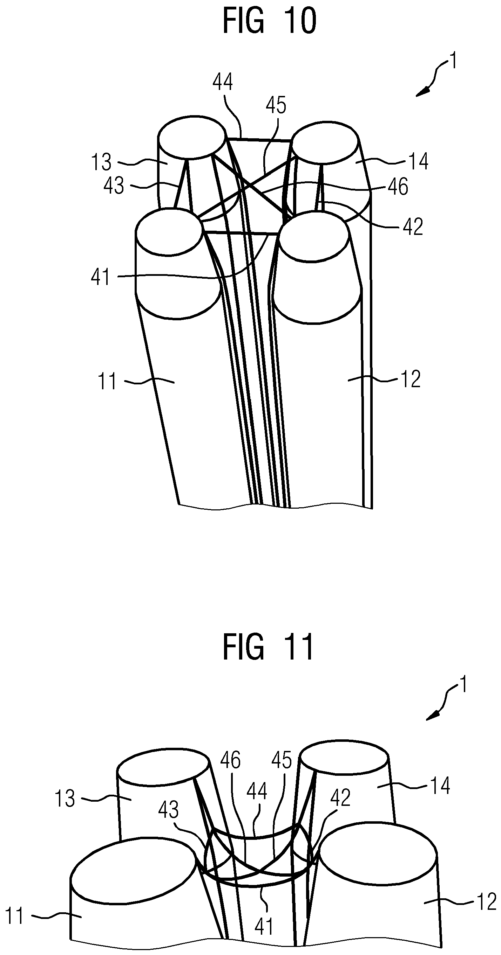

In Figure 10, the first tower 11 is attached to the second tower 12 by a first damping element 41. The first tower 11 is attached to the third tower 13 by a third damping element 43. The first tower 11 is attached to the fourth tower 14 by a fifth damping element 45. The second tower 12 is attached to the fourth tower 14 by a second damping element 42. The third tower 12 is attached to the fourth tower 14 by a fourth damping element 44. The third tower 12 is attached to the second tower 12 by a sixth damping element 46.

The damping elements 41, 42, 43, 44, 45, 46 shown in this Figure are under tension and pretensioned between the towers 11, 12, 13, 14 they are attached to.

In Figure 11, the first tower 11 is attached to the second tower 12 by a first damping element 41. The first tower 11 is attached to the third tower 13 by a third damping element 43. The first tower 11 is attached to the fourth tower 14 by a fifth damping element 45. The second tower 12 is attached to the fourth tower 14 by a second damping element 42. The third tower 12 is attached to the fourth tower 14 by a fourth damping element 44. The third tower 12 is attached to the second tower 12 by a sixth damping element 46.

The damping elements 41, 42, 43, 44, 45, 46 shown in this Figure are loosened between the towers 11, 12, 13, 14 they are attached to. They tension when the towers 11, 12, 13, 14 mover away from each other. They can for example be ropes hanging between the towers 11, 12, 13, 14. An advantage of using ropes which are not under tension is that there is more rope material to dissipate energy when the oscillations start, and the ropes are tensioned. The ropes can also be tensioned from Figure 11 to the setup shown in Figure 10 to adjust the pretension desired by using pulleys or similar means.

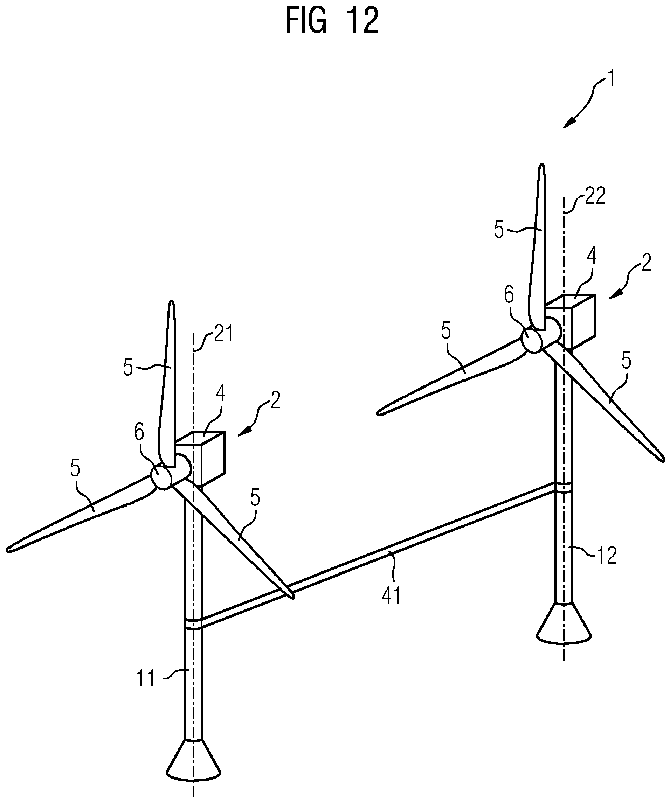

Figure 12 shows a damping arrangement 1 for counteracting oscillations of a plurality of towers 11, 12, of wind turbines 2 comprising a first tower 11, a second tower 12 and a damping means 7 for suppressing and/or dampening oscillations at least partly originated from the relative movement of the towers 11, 12 to each other.

Each a wind turbine 2 comprises a tower 11, 12, a nacelle 4 arranged at an upper end of the tower 11, 12, a hub 6 connected to the nacelle 4 and three blades 5 extending from the hub 6.

The first tower 11 is positioned at a first position 21 and the second tower 12 positioned at a second position 22 different from the first position 21.

The damping means 7 comprises a first damping element 41 arranged between the first tower 11 and the second tower 12 and coupled to both the first tower 11 and the second tower 12.

### Reference numbers

- 1: Damping arrangement
- 2: Wind turbine
- 4: Nacelle
- 5: Blade
- 6: Hub
- 7: Damping means

- 11: First tower
- 12: Second tower
- 13: Third tower
- 14: Fourth tower

- 21: First position
- 22: Second position
- 23: Third position
- 24: Fourth position

- 41: First damping element
- 42: Second damping element
- 43: Third damping element
- 44: Fourth damping element
- 45: Fifth damping element
- 46: Sixth damping element

- 51: First rigid element
- 52: Second rigid element
- 53: Third rigid element
- 54: Fourth rigid element

- 61: First angle
- 62: Second angle

## Claims

1. A damping arrangement (1) for counteracting oscillations of a plurality of towers (11, 12, 13, 14) of wind turbines (2) comprising
a first tower (11) positioned at a first position (21),
a second tower (12) positioned at a second position (22) different from the first position (21), and
a damping means (7) for suppressing and/or dampening oscillations at least partly originated from the relative movement of the towers (11, 12, 13, 14) to each other,
**characterized in that** the damping means (7) comprises a first damping element (41) arranged between the first tower (11) and the second tower (12) and coupled to both the first tower (11) and the second tower (12).

2. The damping arrangement (1) according to claim 1, wherein the damping means (7) further comprises a second damping element (42) arranged between the first tower (11) and the second tower (12) and coupled to both the first tower (11) and the second tower (12).

3. The damping arrangement (1) according to claim 2, wherein the second damping element (42) is arranged at a first angle (61) from the first damping element (41).

4. The damping arrangement (1) according to any of the preceding claims, wherein the first tower (11) is positioned substantially vertically at the first position (21) and/or the second tower (12) is positioned substantially vertically at the second position (22).

5. The damping arrangement (1) according to any of the preceding claims, wherein the damping means (7) further comprises a first rigid element (51) arranged between the first tower (11) and the second tower (12) and coupled to both the first tower (11) and the second tower (12).

6. The damping arrangement (1) according to any of the preceding claims, wherein the damping element (41, 42) comprises resilient means, in particular made from an elastomeric material.

7. The damping arrangement (1) according to any of the preceding claims, wherein the damping element (41, 42) is further configured as a tensioning element providing a predetermined pretension between the towers (11, 12, 13, 14).

8. The damping arrangement (1) according to claim 7, wherein the damping element (41, 42) comprises a rope.

9. The damping arrangement (1) according to any of the preceding claims, wherein the damping element (41, 42) comprises a hydraulic damper configured to provide a counter force against the relative movement of the towers (11, 12, 13, 14).

10. The damping arrangement (1) according to any of the preceding claims, wherein said damping arrangement (1) further comprises a third tower (13) positioned at a third position (23) different from the first position (21) and the second position (22), wherein the damping means (7) further comprises a third damping element (43) arranged between the first tower (11) and the third tower (13) and coupled to both the first tower (11) and the third tower (13).

11. The damping arrangement (1) according to claim 10, wherein the damping means (7) further comprises a fourth damping element (44) arranged between the first tower (11) and the third tower (13) and coupled to both the first tower (11) and the third tower (13).

12. The damping arrangement (1) according to claims 10 or 11, wherein the damping means (7) further comprises a first rigid element (51) arranged between the first tower (11) and the second tower (12) and coupled to both the first tower (11) and the second tower (12) and/or a second rigid element (52) arranged between the first tower (11) and the third tower (13) and coupled to both the first tower (11) and the third tower (13).

13. The damping arrangement (1) according to any of the claims 10 to 12, wherein said damping arrangement (1) further comprises a fourth tower (14) positioned at a fourth position (23) different from the first position (21), the second position (22) and the third position (23), wherein the damping means (7) further comprises a fifth damping element (45) arranged between the third tower (13) and the fourth tower (14) and coupled to both the third tower (13) and fourth tower (14) .

14. The damping arrangement (1) according to claim 13, wherein the damping means (7) further comprises a sixth damping element (46) arranged between the third tower (13) and the fourth tower (14) and coupled to both the third tower (13) and fourth tower (14).

15. The damping arrangement (1) according to any of the claims 10 to 12, wherein said damping arrangement (1) further comprises a fourth tower (14) positioned at a fourth position (23) different from the first position (21), the second position (22) and the third position (23), wherein the damping means (7) further comprises a first rigid element (51) arranged between the first tower (11) and the second tower (12) and coupled to both the first tower (11) and the second tower (12), a second rigid element (52) arranged between the first tower (11) and the third tower (13) and coupled to both the first tower (11) and the third tower (13), a third rigid element (53) arranged between the fourth tower (14) and the third tower (13) and coupled to both the fourth tower (14) and the third tower (13) and a fourth rigid element (52) arranged between the fourth tower (14) and the second tower (12) and coupled to both the fourth tower (14) and the second tower (12).
